**Europäisches Patentamt**

**European Patent Office**

**Office européen des brevets**

(19)

(11) Veröffentlichungsnummer: **0 467 253 A2**

# EUROPÄISCHE PATENTANMELDUNG

(12)

(21) Anmeldenummer: **91111726.5**

(22) Anmeldetag: **14.07.91**

(51) Int. Cl.[5]: **B23B 3/30, B23B 9/08**

(30) Priorität: **16.07.90 DE 4022572**

(43) Veröffentlichungstag der Anmeldung:
**22.01.92 Patentblatt 92/04**

(84) Benannte Vertragsstaaten:
**CH DE FR GB LI SE**

(71) Anmelder: **Boehringer Werkzeugmaschinen GmbH**
**Stuttgarter Strasse 50 Postfach 220**
**W-7320 Göppingen(DE)**

(72) Erfinder: **Bucher, Arnim, Dipl.-Ing.(FH)**
**Ulrichstrasse 16**
**W-7340 Geislingen(DE)**
Erfinder: **Hafner, Wolfgang, Dipl.-Ing. (FH)**
**Zeitblomweg 9**

**W-7334 Süssen(DE)**
Erfinder: **Kuhn, Siegfried, Ing.grad.**
**Gammelshauserstrasse 8**
**W-7321 Dürnau(DE)**
Erfinder: **Räder, Robert Ing.**
**St.-Galler-Strasse 17**
**W-7320 Göppingen(DE)**
Erfinder: **Ritz, Otmar, Dipl.-Ing.**
**Hauptstrasse 121**
**W-7321 Wangen(DE)**
Erfinder: **Unruh, Manfred, Dipl.-Ing. (FH)**
**Hohenstaufenstrasse 52**
**W-7320 Göppingen(DE)**

(74) Vertreter: **Alber, Norbert et al**
**Albert-Rosshaupter-Strasse 65**
**W-8000 München 70(DE)**

(54) **Drehmaschine.**

(57) Drehmaschine mit zwei Spindelstöcken und gegeneinander gerichteten Spannfuttern können in beiden Spannfuttern nacheinander oder gleichzeitig Werkstücke aufnehmen. Um die Werkstücke in beiden Aufspannungen mit Werkzeugen bearbeiten zu können, die in den Werkzeugaufnahmen eines Werkzeugrevolvers eingesetzt sind, sind entweder besonders lang auskragende Werkzeuge oder gar doppelt gekröpfte Werkzeuge - für die Innenbearbeitung - notwendig. Um dies zu vermeiden, wird vorgeschlagen, wenigstens einen der vorhandenen Werkzeugsupporte statt mit einem einfachen mit einem doppelten Werkzeugrevolver auszustatten, deren axiale Werkzeugaufnahmen nach außen, also vom jeweils anderen Werkzeugrevolver wegweisen. Dadurch können Standardwerkzeuge verwendet werden, ohne daß die Bearbeitungsmöglichkeiten in einer der beiden Aufspannungen darunter leiden.

Die Erfindung betrifft Drehmaschinen und insbesondere solche Drehmaschinen mit einem zweiten Spindelstock oder eine andere Werkstückaufnahme besitzt, welche gegeneinander gerichtet sind.

Mit derartigen Drehmaschinen kann ein Werkstück zunächst im Spannfutter des ersten Spindelstockes auf einer Seite gespannt und auf der anderen bearbeitet werden, während das Werkstück anschließend an das gegenüberliegende Spannfutter des zweiten Spindelstockes übergeben wird, wo es mit der bearbeiteten anderen Seite gespannt wird, so daß die erste Seite, an der vorher gespannt wurde, nunmehr fertig bearbeitet wird. Es müssen daher bei Bearbeitung der beiden Stirnseiten des Werkstückes Werkzeuge sowohl in der positiven als auch in der negativen Maschinenlängsachse, der Z-Richtung, angreifen.

Bei modernen Drehmaschinen ist der Werkzeugsupport in aller Regel mit einem drehbaren Werkzeugrevolver bestückt. Handelt es sich dabei um einen Trommelrevolver, also mit in Z-Richtung gerichteten Werkzeugaufnahmen, so ragen diese Werkzeugaufnahmen und damit auch die dort eingesetzten Werkzeuge beispielsweise in die negative Z-Richtung, was für die Bearbeitung der Stirnseite in der ersten Aufspannung günstig ist.

Falls mit einem solchen Werkzeugrevolver jedoch auch die Stirnseite des Werkstückes in der zweiten Aufspannung bearbeitet werden sollen, ist hierzu eine doppelte Kröpfung des Werkzeuges erforderlich, denn das Werkzeug wird mit seinem Schaft in die in die negative Z-Richtung weisende Werkzeugaufnahme eingesetzt, ist um 90° von der Revolverachse aus radial nach außen gekröpft und anschließend nochmals um etwa 90° in die positive Z-Richtung gekröpft, wobei das Werkzeug um den äußeren Umfang der Revolverscheibe herumreichen muß. Derartige Sonderwerkzeuge sind aufgrund ihrer Herstellung in nur geringen Stückzahlen erstens recht teuer und zweitens aufgrund ihrer Länge und zweimaligen Kröpfung nur wenig stabil.

Handelt es sich bei der Revolverscheibe um eine solche, die nur oder auch radial abstrebende Werkzeugaufnahmen aufweist, wie ein Sternrevolver, so müssen dort eingesetzte Werkzeuge zwar für die Bearbeitung der Stirnseite immer gekröpft sein, jedoch sind die Standardwerkzeuge meist in eine bestimmte Richtung gekröpft und die Werkzeugaufnahmen in aller Regel so ausgebildet, daß der Werkzeugschaft nur in einer definierten Lage eingesetzt werden kann. Dies bedeutet, daß bei eingesetztem Standard-Plandrehwerkzeug nur die Stirnseite in beispielsweise der ersten Aufspannung bearbeitet werden kann, während für die Bearbeitung im gegenüberliegenden Spannfutter ein in die andere Richtung gekröpftes Werkzeug und damit wiederum ein Sonderwerkzeug notwendig ist. Zusätzlich weist dann das Werkzeug in die Richtung des Werkzeugsupportes, an welchem die Revolverscheibe gelagert ist. Daher können sich bei der Bearbeitung des Werkstückes in der zweiten Aufspannung Kollisionen zwischen dem Werkstück und dem Werkzeugsupport ergeben, was einen zusätzlichen Nachteil dieser Ausführungsform darstellt.

Besonders kraß wirken sich die genannten Werkzeuge bei axial wirkenden Innenbearbeitungswerkzeugen wie Bohrern, Bohrstangen etc. aus. Auch in diesem Fall ist eine doppelte Kröpfung notwendig, wobei es besonders leicht zu einer Kollision des Werkstückes oder des entsprechenden Spannfutters mit dem Werkzeugsupport kommen kann, welcher vom Werkzeugrevolver aus in Richtung auf das zu bearbeitende Werkstück ragt.

Es ist daher die Aufgabe der Erfindung, eine Drehmaschine mit zwei gegeneinander gerichteten Spindelstöcken zu schaffen, bei der die Werkstükke in beiden Aufspannungen mit Standardwerkzeugen bearbeitet werden können, die in Werkzeugrevolvern aufgenommen sind, ohne daß hierfür zwei separat laufende Werkzeugsupporte notwendig werden, sofern keine Simultanbearbeitung von Werkstücken in den beiden Aufspannungen beabsichtigt ist.

So zeigt beispielsweise die Drehmaschine der Firma Gildemeister mit der Bezeichnung GT 50 zwei unabhängig voneinander verfahrbare Werkzeugsupporte, die jeweils mit einem Werkzeugrevolver ausgestattet sind. Zwar kann dabei in einigen Fällen - abhängig von günstigen Abmessungen des jeweiligen Werkstückes - mit dem Werkzeug eines der Revolver und damit auch eines der Werkzeugsupporte u.U. das Werkstück in beiden Aufspannungen bearbeitet werden, bei etwas ungünstigeren Werkstückabmessungen ist dies jedoch bereits nicht mehr möglich. In gleicher Weise werden auch für die Drehmaschine "Tornos Bechler Top 200", die ebenfalls zwei unabhängige Werkzeugsupporte mit je einem Werkzeugrevolver aufweisen, doppelt gekröpfte Bohrwerkzeuge angeboten und vorgesehen, die notwendig sind, um ohne Kollision mit dem Revolverträger Bohrbearbeitungen in der freien Stirnseite des eingespannten Werkstückes vorzunehmen.

Diese Aufgabe ist in den kennzeichnenden Merkmalen des Anspruchs 1 gelöst. Vorteilhafte Ausführungsformen ergeben sich aus den Unteransprüchen.

Die Lösung besteht darin, daß auf einem einzigen Werkzeugsupport zwei Werkzeugrevolver montiert sind, deren axial gerichtete Werkzeugaufnahmen in entgegengesetzte Richtungen weisen und deren radial gerichtete Werkzeugaufnahmen so angeordnet sind, daß eingesetzte Plandrehwerkzeuge ebenfalls in entgegengesetzte Richtungen, immer parallel zur Z-Richtung, weisen. Die Drehachsen der Werkzeugrevolver liegen also in Z-Richtung und sind vorzugsweise identisch.

Damit sind die in den einen Werkzeugrevolver eingesetzten Werkzeuge für die Bearbeitung von Werkstücken zuständig, die in die erste Werkzeugaufnahme, also das erste Spannfutter, eingesetzt sind, während die Werkzeuge des zweiten Werkzeugrevolvers Werkstücke im zweiten Spannfutter bearbeiten können.

Da beide Werkzeugrevolver auf einem gemeinsamen Werkzeugsupport montiert sind, ist damit in aller Regel keine Simultanbearbeitung dieser beiden Werkstücke möglich, es sei denn, die Abmessungen des gewünschten Werkstückes sind hierfür besonders günstig und einer der beiden Spindelstöcke ist in Z-Richtung verfahrbar.

Falls eine solche Simultanbearbeitung jedoch nicht grundsätzlich durchgeführt werden soll, erspart man sich hierdurch die Kosten eines zweiten, unabhängig vom ersten verfahrbaren Werkzeugsupport, welcher ja wiederum in Z- und X-Richtung verfahrbar sein müsste. Besonders hoch ist der Kostenvorteil dann, wenn auch nur eine Bewegungsmöglichkeit zusätzlich in X-Richtung ermöglicht werden soll.

Um für den jeweiligen Bearbeitungsvorgang das richtige Werkzeug in Bearbeitungsposition fahren zu können, sollten die beiden Revolverscheiben vorzugsweise unabhängig voneinander drehbar sein. Dies ermöglicht beispielsweise eine Bearbeitung hintereinander durch mehrere Werkzeuge ein und desselben Werkzeugrevolvers, wobei ein Werkzeug des anderen Werkzeugrevolvers hiervon unberührt in einer Position verbleiben kann, in der es jeweils wieder zur Bearbeitung eingesetzt wird, ohne daß wegen der Verstellung des anderen Revolvers jedesmal wieder ein Anfahren der Bearbeitungsposition für den anderen Revolver notwendig ist. Die Drehbarkeit der beiden Revolver unabhängig voneinander ermöglicht beispielsweise auch bei Verfahrbarkeit wenigstens eines der Spindelstöcke in Z-Richtung für einige Anwendungsfälle eine simultane Bearbeitung beider Werkstücke, wenn es beispielsweise um ein Plandrehen oder Umfangsdrehen bei gleichem Umfang geht.

Ferner werden vorzugsweise beide Werkzeugrevolver Werkzeugaufnahmen aufweisen, die in Z-Richtung weisen, also der Achsrichtung des Revolvers. Gerade bei solcher Art gerichteten Werkzeugaufnahmen ist für eine Bearbeitung in Gegenrichtung eine doppelte Kröpfung bei den Sonderwerkzeugen notwendig, was besonders nachteilig für die Stabilität dieser Werkzeuge ist. Weisen die Werkzeugaufnahmen dagegen in die Z-Richtung, so weisen die Standardwerkzeuge für die Außen- und Innenbearbeitung höchstens eine Kröpfung um maximal 45° auf, die noch eine sehr hohe Steifigkeit des Werkzeuges bieten.

Wenn dabei die beiden Werkzeugrevolver koaxial angeordnet sind, so wird hierdurch nicht nur die Steuerung der beiden Revolver vereinfacht, sondern auch das Nachvollziehen von Arbeitsbewegungen durch den beobachtenden Bediener. Für Spezialfälle der Bearbeitung, bei denen durch die Form des Werkstückes bedingt bei der Aufspannung im ersten Spannfutter andere Kollisionshindernisse vorliegen als bei der Aufspannung im zweiten Spannfutter, kann es selbstverständlich empfehlenswert sein, die beiden Revolver auch axial versetzt zueinander anzuordnen.

Bei Drehmaschinen, die zwar über zwei getrennte Werkzeugsupporte verfügen, von denen jedoch nur einer zusätzlich zur X- und Z-Richtung auch eine Bewegungsmöglichkeit in Y-Richtung besitzt, ist es vorteilhaft, diesen auch in Y-Richtung bewegbaren Support mit dem doppelten Werkzeugrevolver auszustatten, da hierdurch bekanntermaßen auch außermittige Bearbeitung am stillstehenden Werkstück ermöglicht werden. Diese Vorteile können dann am Werkstück in beiden Aufspannungen genutzt werden.

Dabei können die beiden Revolverscheiben natürlich auch mit angetriebenen Werkzeugen sowohl radial als auch horizontal bestückt werden. Diese Werkzeuge können dann von nur einem Antrieb aus in Drehung versetzt werden, was der Gewichtsminimierung der Maschine dient. Ebenso ist ein evtl. vorhandenes Getriebe für den Antrieb der Werkzeuge ebenfalls für beide Revolver nutzbar.

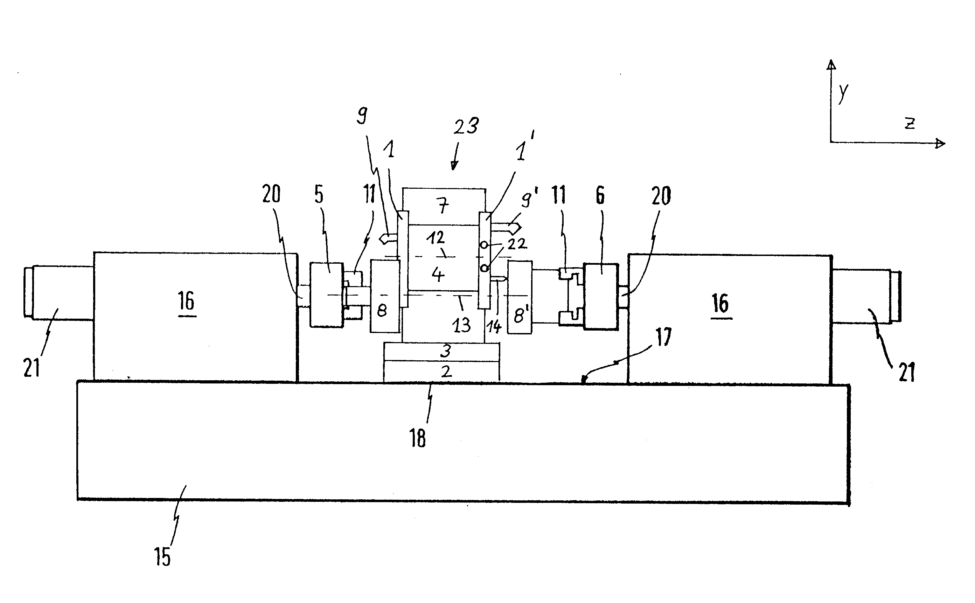

Eine Ausführungsform gemäß der Erfindung ist im folgenden anhand der Fig. 1 beispielhaft näher erläutert, die eine erfindungsgemäße Drehmaschine in Prinzipdarstellung zeigt. In der Fig. 1 ist eine Drehmaschine mit einem Maschinenbett 15 zu erkennen, auf welchem zwei Spindelkästen 16 sitzen. Einer der Spindelstöcke 16 ist in Z-Richtung entlang des Maschinenbettes 15 verfahrbar.

An jedem der Spindelkästen 16 ist ein Motor 21 angeflanscht, der zum Antrieb der Spindel 20 dient, auf deren freiem Ende sich jeweils ein Spannfutter 5 bzw. 6 mit Klemmbacken 11 befindet.

Im vorliegenden Fall ist in beiden Futter 5 und 6 jeweils ein Werkstück 8 bzw. 8' aufgenommen. Die beiden Spannfutter 5 und 6 sind gegeneinander gerichtet, so daß die Werkstücke 8 bzw. 8' lediglich durch Horizontalbewegung in Z-Richtung von einem Spannfutter 5 in das andere Spannfutter 6, die auf einer gemeinsamen Drehachse 13 liegen, übergeben werden kann und umgekehrt. Dies kann durch einen nicht dargestellten Transportarm geschehen oder durch Verfahren des beweglichen der beiden Spindelstöcke 16 auf den anderen Spindelstock zu.

Im Bereich zwischen den beiden Spindelstöck-

ken 16 ist der gesamte Werkzeugsupport 23 zu erkennen. Dieser besteht aus einem Längsschlitten 2, der sich entlang der Z-Richtung auf den Führungsbahnen 18 des Maschinenbettes 15 bewegen kann. Je nach Bauart der Maschine sind diese Führungsbahnen 18 auch mit den Führungsbahnen 17, entlang welcher sich der bewegbare Spindelstock 16 in Z-Richtung auf dem Maschinenbett 15 bewegen kann, identisch. Auf dem Längsschlitten 2 läuft ein Planschlitten 3, der auf dem Längsschlitten 2 in der X-Richtung, also senkrecht zur Zeichenebene der Fig. 1, entlang entsprechender nicht dargestellter Führungen bewegbar ist.

Im vorliegenden Fall ist auf diesem Planschlitten zusätzlich eine Y-Einheit 7 montiert, entlang welcher der Revolverträger 4 entlang der X-Richtung verfahrbar ist.

Der Revolverträger 4 trägt an seinen Stirnseiten jeweils eine kreisförmige Revolverscheibe 1, die mit ihren Außenflächen senkrecht zur Z-Richtung, der Längsachse der Maschine, verlaufen. Beide Revolverscheiben 1 sind unabhängig voneinander um eine gemeinsame Drehachse 12 definiert schwenkbar im Revolverträger 4 aufgenommen.

Jede der Revolverscheiben 1 weist in der Fig. 1 nicht sichtbare, vom Revolverträger 4 wegweisende Werkzeugaufnahmen in Z-Richtung auf, in welchen beispielsweise dargestellte Werkzeugköpfe 9 mit Außendrehwerkzeugen eingesetzt sind. Ebenso ist in die rechte Revolverscheibe 1 ein angetriebenes Bohrwerkzeug 14, welches nur symbolisch dargestellt ist, in eine solche in Z-Richtung weisende Werkzeugaufnahme eingesetzt.

An diesem Bohrwerkzeug 14 ist auch ersichtlich, daß mit diesem Bohrwerkzeug 14, welches in die vom Revolverträger 4 wegweisende Stirnfläche der rechten Revolverscheibe 1 eingesetzt ist, zwar eine Bohrbearbeitung in der freien Stirnseite des Werkstückes 8', aber niemals eine äquivalente Bohrbearbeitung in der freien Stirnseite des Werkstückes 8 des gegenüberliegenden Spannfutters 5 durchgeführt werden könnte. Zwar wäre daran zu denken, in diesem Falle in die andere Stirnfläche der Revolverscheibe 1, also außerhalb des Bereiches des Revolverträgers 4, Werkzeugaufnahmen einzusetzen. In diesem Fall könnten jedoch höchstens solche Positionen in der Stirnseite des Werkstückes 8 angefahren werden, die von dessen Außenrand einen geringeren Abstand aufweisen als eine entsprechende Werkzeugaufnahme vom Außenrand des Werkzeugrevolvers. Die Mitte größerer Werkstücke könnte damit also nicht bearbeitet werden. Ebenso könnte mit dem in die rechte Revolverscheibe 1 eingesetzten Drehwerkzeug 9' nicht das Werkstück 8 in seiner jetzigen Aufspannung im Spannfutter 5 aufgespannt werden, da hierbei Kollisionen der Revolverscheibe mit dem Werkstück oder dem Spannfutter auftreten würden.

Obwohl in solche Revolverscheiben 1 in aller Regel wesentlich mehr Werkzeuge während des Betriebes der Maschine eingesetzt sind, sind diese nicht eingezeichnet, um die Übersichtlichkeit der Darstellung zu erhalten.

Ebenso sind in die rechte Revolverscheibe 1' nur beispielhaft zwei Werkzeugaufnahmen 22 eingezeichnet, welche von der Umfangsfläche der Revolverscheibe 1' radial nach außen ragen. Auch in diese Werkzeugaufnahme 22 können Werkzeuge eingesetzt werden, die zur Außendrehbearbeitung beispielsweise der Umfangsfläche eines Werkstückes dienen. Hierbei können zwar theoretisch sowohl die Außenfläche des Werkstückes 8 als auch des Werkstückes 8' in den dargestellten Aufspannungen bearbeitet werden. Um mit einem solchen Werkzeug jedoch beispielsweise die freiliegende Stirnfläche des Werkstückes 8 bis zur Mitte plandrehen zu können, mü#ßte ein solches Werkzeug jedoch eine große Länge besitzen, also von der verwindungssteifen Revolverscheibe 1' weit auskragen, da es ansonsten zu Kollisionen des Werkstückes 8 mit dem Revolerträger 4 kommen würde. Weit auskragende Werkzeuge haben jedoch naturgemäß eine geringere Stabilität als kurze Werkzeuge und liefern damit entweder ein schlechteres Bearbeitungsergebnis bei gleicher Zerspanungsleistung oder eine gleiche Bearbeitungsqualität bei geringerer Zerspanungsleistung. Auch für die Umfangsbearbeitung ist es daher sinnvoll, zwei Revolverscheiben 1, 1' an einem gemeinsamen Revolverträger 4 anzuordnen, deren axial gerichtete Werkzeugaufnahmen voneinander wegweisen und die zusätzlich radial abstrebende Werkzeugaufnahmen 22 besitzen. Damit können in alle Werkzeugaufnahmen die handelsüblichen, stabilen und kostengünstigen Werkzeugköpfe mit Standardwerkzeugen eingesetzt werden.

**Patentansprüche**

1. Drehmaschine mit zwei gegeneinander gerichteten Werkstückaufnahmen, insbesondere Spannfuttern, die auf zwei getrennten Spindelstöcken sitzen, und wenigstens einen, in wenigstens der Z- und X-Richtung verfahrbaren Werkzeugsupport aufweisen,
**dadurch gekennzeichnet, daß** der Werkzeugsupport (23) zwei in entgegengesetzte Richtungen weisende Werkzeugrevolver (1, 1') aufweist.

2. Drehmaschine nach Anspruch 1,
**dadurch gekennzeichnet, daß**
die beiden Werkzeugrevolver (1, 1') unabhängig voneinander jeweils um ihre Drehachse (12) schwenkbar sind.

3. Drehmaschine nach Anspruch 1 oder 2,
**dadurch gekennzeichnet, da**ß
beide Werkzeugrevolver (1, 1') in Z-Richtung, der Achsrichtung des Revolvers vom jeweils anderen Werkzeugrevolver wegweisende Werkzeugaufnahmen aufweist.

4. Drehmaschine nach einem der vorhergehenden Ansprüche,
**dadurch gekennzeichnet**, da*ß*
beide Werkzeugrevolver (1, 1') koaxial zueinander angeordnet sind.

5. Drehmaschine mit zwei Werkzeugsupporten, von denen nur einer zusätzlich auch in X-Richtung verfahrbar ist und nur ein Werkzeugsupport mit zwei Werkzeugrevolvern ausgestattet ist, gemäß einem der vorhergehenden Ansprüche,
**dadurch gekennzeichnet**, da*ß*
der zusätzlich in X-Richtung bewegbare Werkzeugsupport (23) die beiden Werkzeugrevolver (1, 1') aufweist.

EP 0 467 253 A2